# EUROPÄISCHE PATENTANMELDUNG

(11) **EP 2 821 986 A1**
(43) Veröffentlichungstag der Anmeldung: **07.01.2015**
(21) Anmeldenummer: 13003326.9
(22) Anmeldetag: 01.07.2013
(51) Int. Cl.: G09F 19/12, G02B 27/22, G06F 1/16, H04N 5/64

(54) **Vorrichtung und Verfahren zur Erzeugung einer räumlichen Tiefenwirkung einer in einer 2D Bildfläche vorliegenden Bildinformation**

(71) Anmelder: Wolf, Roland, 5712 Beinwil am See (CH)
(72) Erfinder: Wolf, Roland, 5712 Beinwil am See (CH)
(74) Vertreter: Schaad, Balass, Menzl & Partner AG

(57) **Zusammenfassung**

Die Erfindung betrifft eine Vorrichtung (10) bzw. ein Verfahren zur Erzeugung einer räumlichen Tiefenwirkung einer in einer 2D Bildfläche (18, 18') vorliegenden Bildinformation (38). Die Vorrichtung hat eine eine Öffnung (14) aufweisende Sichtblende (12), wobei die Sichtblende (12) einen ein sichtfeld (15) begrenzenden Rand (16) aufweist und die öffnung (14) das sichtfeld (15) ausbildet- Zudem hat die Vorrichtung eine 2D Bildfläche (18, 18'), die in einem Abstand (20) hinter der Sichtblende (12) angeordnet ist. Bei bestimmungsgemässem Gebrauch der Vorrichtung (10) von einem Betrachtungsort (24) her gesehen, verdeckt die Sichtblende (12) den äusseren Rand (22) der 2D Bildfläche (18, 18') und allenfalls ein nach radial aussen an den äusseren Rand (22) anschliessendes Rahmenelement (28, 28', 28") . Erfindungsgemäss ist der Abstand (20) zwischen dem das sichtfeld (15) begrenzenden Rand (16) der sichtblende (12) und der dahinter angeordneten 2D Bildfläche (18, 18') wenigstens annährend konstant.

## Beschreibung

Die vorliegende Erfindung betrifft eine Vorrichtung und ein Verfahren zur Erzeugung einer räumlichen Tiefenwirkung gemäss dem Patentanspruch 1 beziehungsweise 11.

Die WO 2010/094269 A2 offenbart eine Bildschirm-Betrachtungsvorrichtung für ein Bildschirmgerät. Die Betrachtungsvorrichtung umfasst eine rahmenförmig ausgebildete, eine Sichtöffnung aufweisende Vorderwand, wobei die vorderwand mit einer Befestigungseinrichtung lösbar am Bildschirmgerät befestigbar ist. Um bei einer Betrachtungsposition eine räumliche Bildwahrnehmung der auf dem Bildschirm dargestellten Bilder zu erzielen, muss einerseits der seitliche Rand des Bildschirmgerätes vom rahmenförmigen Bereich der Vorderwand verdeckt sein und anderseits muss die Vorderwand der Betrachtungsvorrichtung konkav oder konvex gegenüber dem ebenen Bildschirm gewölbt sein.

Die konkave ebenso wie die konvexe wölbung der Vorderwand gegenüber dem ebenen Bildschirm bewirkt, von einem Betrachtungsort her gesehen, einerseits die Wahrnehmung der Wölbung der Vorderwand und anderseits die Wahrnehmung der hinter der gewölbten Vorderwand angeordneten ebenen Bildfläche, wodurch beim Betrachter ein stereoskopisches Sehen hervorgerufen wird, welches der räumlichen Bildwahrnehmung entspricht.

Es ist allgemein bekannt, dass beim stereoskopischen Sehen das Gehirn zwei unterschiedliche Bilder verarbeiten muss, wobei dies mit einem Lerneffekt verbunden ist, um die räumliche Bildwahrnehmung erkennen zu können. Dies kann beim Anwender der Betrachtungsvorrichtung zu Ermüdungserscheinungen und daraus resultierenden Kopfschmerzen führen. Daher kann zum Ausschalten des stereoskopischen Sehens oder für den Transport die Bildschirm-Betrachtungsvorrichtung gemäss der WO 2010/094269 A2 von der Betrachtungsposition in eine Ruheposition gebracht werden, wobei in der Ruheposition die Vorderwand unmittelbar am ebenen Bildschirm anliegt.

Die DE 10 2005 056 873 Al und die WO 2008/052527 A2 offenbaren jeweils eine Betrachtungsvorrichtung bei denen eine eine Sichtöffnung aufweisende Vorderwand eben oder gering gewölbt ausgebildet ist und, zur Erzielung einer räumlichen Bildwahrnehmung, muss die dahinter angeordnete Bildfläche, vom Betrachter weg, konvex gewölbt ausgebildet sein.

Die DE 203 17 862 Ul offenbart ebenfalls eine Betrachtungsvorrichtung bei der eine hinter einer eine Sichtöffnung aufweisenden Vorderwand angeordnete Bildfläche vom Betrachter weg konvex gewölbt ausgebildet ist, wobei dieses Dokument lehrt, dass zur weiteren Erhöhung der räumlichen Bildwahrnehmung, die Vorderwand, zum Betrachter hin, konkav ausgebildet sein muss.

Folglich lehren die oben aufgeführten Dokumente, dass die räumliche Bildwahrnehmung nur dann möglich ist, wenn die Vorderwand und/oder die hinter der Vorderwand angeordnete Bildfläche gewölbt ausgebildet ist, um nach dem Prinzip des stereoskopischen Sehens, die gewünschte wirkung zu erhalten, jedoch mit der Gefahr der oben ausgeführten Nachteile für den Betrachter der Betrachtungsvorrichtungen bei entsprechender Anwendung.

Es ist somit eine Aufgabe der vorliegenden Erfindung, eine Vorrichtung und ein verfahren bereitzustellen, die beziehungsweise das eine räumlichen Tiefenwirkung einer in einer 2D Bildfläche vorliegenden Bildinformation erzeugt, ohne körperliche Beeinträchtigung beim Anwender während des bestimmungsgemässen Gebrauchs der Vorrichtung beziehungsweise des Verfahrens.

Die Aufgabe wird durch die Vorrichtung und das Verfahren gemäss dem Patentanspruch 1 beziehungsweise 11 gelöst.

Die Vorrichtung gemäss Patentanspruch 1 zur Erzeugung einer räumlichen Tiefenwirkung einer in einer 2D Bildfläche vorliegenden Bildinformation hat eine eine Öffnung aufweisende Sichtblende, wobei die Sichtblende einen ein Sichtfeld begrenzenden Rand aufweist und die Öffnung das Sichtfeld ausbildet. Zudem hat die Vorrichtung eine in einem Abstand hinter der Sichtblende angeordnete und von einem äusseren Rand umfangseitig begrenzte 2D Bildfläche, wobei die 2D Bildfläche grösser als die Öffnung der Sichtblende ist. Bei bestimmungsgemässem Gebrauch, von einem Betrachtungsort her gesehen, deckt die Sichtblende den äusseren Rand der 2D Bildfläche und allenfalls ein nach radial aussen an den äusseren Rand anschliessendes Rahmenelement ab. Der Abstand zwischen dem das Sichtfeld begrenzenden Rand der sichtblende und der dahinter angeordneten 2D Bildfläche ist wenigstens annährend konstant.

Durch den annährend konstanten Abstand des das Sichtfeld begrenzenden Randes der Sichtblende zur dahinter angeordneten 2D Bildfläche, ist es vom Betrachtungsort her gesehen nicht mehr möglich, den genauen Standort der 2D Bildfläche zu erfassen. Entsprechend entsteht ein sogenannter losgelöster Raum vor der Sichtblende in Richtung zur 2D Bildfläche unter Berücksichtigung der Bildinformation aus der 2D Bildfläche, wodurch dem Betrachter vom Betrachtungsort her gesehen die räumliche Tiefenwirkung vermittelt wird.

Der Effekt der erfindungsgemässen Vorrichtung beziehungsweise des Verfahrens kann damit erklärt werden, dass in Umkehrung des eine Lochkamera zugrundeliegenden Prinzips, die räumliche Tiefenwirkung vom Betrachtungsort hergesehen vor der Sichtblende in Richtung zur 2D Bildfläche erzeugt wird, wenn der Abstand des Sichtfeld begrenzenden Randes zur 2D Bildfläche wenigstens annährend konstant ist.

Es sei in diesem Zusammenhang darauf hingewiesen, dass der erzeugte losgelöste Raum, vom Betrachtungsort her gesehen, vor der Sichtblende in Richtung zur 2D Bildfläche nicht mit der Bildwahrnehmung nach dem Prinzip des stereoskopischen Sehens vergleichbar ist, denn bei der vorliegenden Erfindung wird die 2D Bildfläche vom Betrachter nicht wahrgenommen, so dass das Gehirn des Betrachters keine Doppelbilder, wie bei der mit der gegenüber dem ebenen Bildschirm konkav oder konvex gewölbten vorderwand vorliegenden Betrachtungsvorrichtung gemäss dem Stand der Technik, verarbeiten muss. Vielmehr stellt sich mittels der erfindungsgemäseen Vorrichtung beziehungsweise des Verfahrens der gewünschte Effekt automatisch ein, sobald der das Sichtfeld begrenzende Rand der Sichtblende den definierten Abstand zur 2D Bildfläche aufweist.

Aus diesem Grund kann auch ein Betrachter, der nur noch ein einziges funktionsfähiges Auge hat und bei dem somit nur noch ein monoskopisches Sehen möglich ist, ebenfalls diesen losgelösten Raum vor der Sichtblende in Richtung zur 2D Bildfläche erkennen.

Vorzugsweise liegt die Bildinformation auf der gesamten 2D Bildfläche bis zum äusseren Rand der 2D Bildfläche vor.

Bei der vorliegenden Erfindung kann im Übrigen auf Hilfsmittel, sei es elektronischer Art oder in Form einer speziellen Brille wie bei herkömmlichen Betrachtungsvorrichtungen für die 3D Anwendung beispielsweise zur Betrachtung eines 3D Filmes, vollständig verzichtet werden, denn die räumliche Tiefenwirkung entsteht, sobald der das Sichtfeld begrenzende Rand der Sichtblende den definierten Abstand zur 2D Bildfläche aufweist.

Ein weiterer Vorteil gemäss der vorliegenden Erfindung ist die Tatsache, dass die räumliche Tiefenwirkung jener Auflösung der in der 2D Bildfläche vorliegenden Bildinformation entspricht, d.h. es gibt keinen Verlust in der Auflösung oder in der Farbdarstellung.

An dieser Stelle sei überdies erwähnt, dass die Sichtblende aus einem undurchsichtigen Material gefertigt ist. Dies führt vom Betrachtungsort her gesehen zu dem durch die Öffnung ausgebildeten Sichtfeld in Richtung zur 2D Bildfläche. Lediglich der durchsichtige Teil der Sichtblende, also die Öffnung in der Sichtblende, erlaubt die Sicht auf einen Bildausschnitt auf der mit der Bildinformation gespeicherten 2D Bildfläche. Der undurchsichtige äussere Rand der Sichtblende deckt hingegen den äusseren Rand der 2D Bildfläche und allenfalls das nach radial aussen an den äusseren Rand anschliessende Rahmenelement ab.

Bei einer bevorzugten Ausführungsform ist der Abstand des Sichtfeld begrenzenden Randes der Sichtblende zur dahinter angeordneten 2D Bildfläche etwa 2% bis etwa 30% einer grössten Ausdehnung, insbesondere einer Diagonalen, der 2D Bildfläche.

Besonders bevorzugt ist der Abstand etwa 4% bis etwa 20%, besonders bevorzugt etwa 8% bis etwa 15%, der grössten Ausdehnung der 2D Bildfläche.

Vorzugsweise ist der Abstand etwa 10% der grössten Ausdehnung der 2D Bildfläche.

Bevorzugt liegt der das Sichtfeld begrenzende Rand der Sichtblende in einer Ebene. Wegen des annährend konstanten Abstands der das Sichtfeld begrenzenden Randes der Sichtblende zur dahinter angeordneten 2D Bildfläche wird vom Betrachtungsort her gesehen die Wahrnehmung von separaten Doppelbildern wie in der Einleitung zum Stand der Technik ausgeführt, verhindert.

Bei einer bevorzugten Ausführungsform ist die 2D Bildfläche eben ausgebildet. Auch diese Ausführungsform verhindert die Wahrnehmung von separaten Doppelbildern bei Verwendung der erfindungsgemässen Vorrichtung.

Bevorzugt sind der das Sichtfeld begrenzende Rand der Sichtblende und die 2D Bildfläche zueinander parallel angeordnet. Hierbei ist besonders bevorzugt, der in der Ebene liegende das Sichtfeld begrenzende Rand der Sichtblende dem Betrachtungsort zugewandt.

Bei einer bevorzugten Ausführungsform sind die Öffnung, insbesondere der das Sichtfeld begrenzende Rand der Sichtblende und der äussere Rand der 2D Bildfläche in ihrer Form ähnlich. Der Begriff ähnlich wird in diesem Zusammenhang im mathematischen Sinne verwendet und soll zum Ausdruck bringen, dass durch eine zentrische Streckung die geometrische Form der Öffnung, insbesondere des Sichtfeld begrenzenden Randes der Sichtblende in die geometrische Form des äusseren Randes der 2D Bildfläche überführbar ist.

Bevorzugt ist die Öffnung der Sichtblende mit einem transparenten Material überspannt. Mittels des transparenten Materials ist es möglich, die hinter der Sichtblende angeordnete 2D Bildfläche vor äusseren Einwirkungen zu schützen.

Bei einer besonders bevorzugten Ausführungsform ist das transparente Material eine Glasscheibe. Hierbei kann die Glasscheibe in die Öffnung der Sichtblende eingebracht sein oder die Sichtblende selbst sein.

Für den Fall, dass die Sichtblende selbst die Glasscheibe ist, muss ein sichtfeldbegrenzender Anteil der Glasscheibe mit einem undurchsichtigen Material, insbesondere einer abdeckenden Farbe, versehen sein, so dass die Sicht auf den äusseren Rand der 2D Bildfläche und allenfalls das nach radial aussen an den äusseren Rand anschliessende Rahmenelement verwehrt bleibt.

Die Glasscheibe kann besonders bevorzugt doppelseitig entspiegelt sein, um Spiegelungen auf der Glasscheibe seitens der 2D Bildfläche oder der Umgebung zu vermeiden. Es sei an dieser Stelle erwähnt, dass die vorliegende Erfindung besonders gut für eine "Tiefenillusion" im Sinne eines typischen Fensterblicks in die Ferne geeignet ist speziell bei einer Anwendung in hellen Räumen, insbesondere bei Tageslicht und bei künstlichem Licht.

Bevorzugt findet die erfindungsgemässe Vorrichtung bzw. das Verfahren seine Anwendung insbesondere in kleinen bis grossen Apparaten sowie in kleinen bis sehr grossen Anlagen wie beispielsweise vom Handy über mobile Tablets über TV-Geräte über Kinos bis hin zu grossen Sälen.

Weitere Vorteile und Eigenschaften der erfindungsgemässen Vorrichtung beziehungsweise des Verfahrens gehen aus der nachstehenden Beschreibung eines Ausführungsbeispiels hervor, welches anhand der Zeichnung erläutert wird.

Es zeigt rein schematisch:

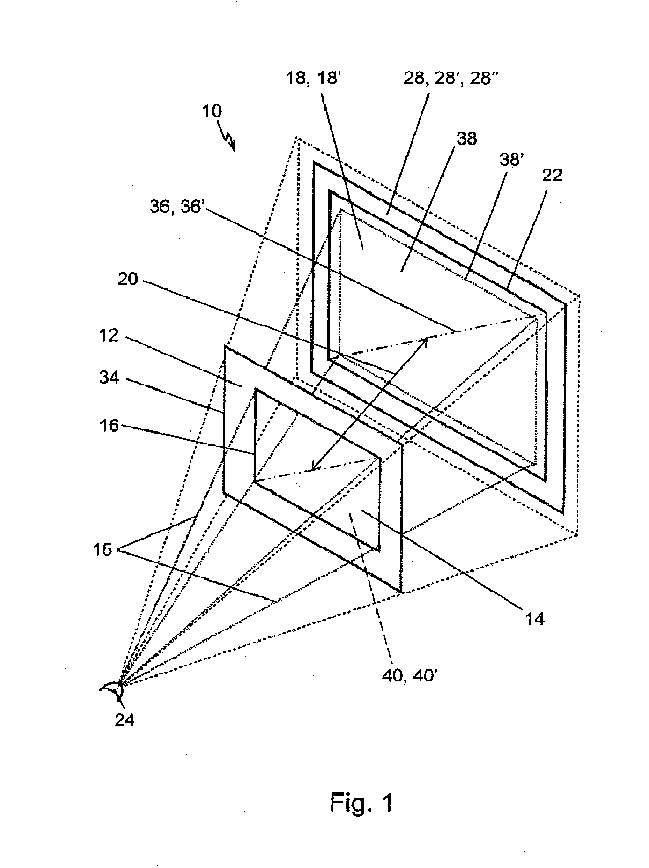

- Fig. 1: in Explosionsdarstellung eine erfindungsgemässe Vorrichtung mit einer eine Öffnung aufweisenden Sichtblende und einer in einem Abstand hinter der Sichtblende angeordneten und von einem äusseren Rand umfangseitig begrenzten 2D Bildfläche.

Die in Fig. 1 gezeigte vorrichtung 10 zur Erzeugung einer räumlichen Tiefenwirkung hat eine rahmenförmige Sichtblende 12 mit einer, im vorliegenden Fall, rechteckigen Öffnung 14. Die Sichtblende 12 weist einen ein Sichtfeld 15 begrenzenden Rand 16 auf und die Öffnung 14 bildet das Sichtfeld 15 aus.

Es sei an dieser Stelle erwähnt, dass die Form der Öffnung 14 in der Sichtblende 12, insbesondere jene des Sichtfeld 15 begrenzenden Randes 16 der Sichtblende 12, auch als jede andere Form, beispielsweise kreisförmig oder elliptisch, ausgebildet sein kann.

Die rahmenförmige Sichtblende 12 ist aus einem undurchsichtigen Material gefertigt. Zur besseren Veranschaulichung ist die Sichtblende 12 in Fig. 1 rein schematisch dargestellt, um das Prinzip der vorliegenden Erfindung besser zu illustrieren.

Hinter der Sichtblende 12 ist in einem wenigstens annährend konstanten Abstand 20 eine 2D Bildfläche 18 angeordnet. Die 2D Bildfläche 18 ist von einem äusseren Rand 22 umfangseitig begrenzt. Zudem ist die 2D Bildfläche 18 grösser als der das sichtfeld 15 begrenzende Rand 16 der Sichtblende 12.

Von einem Betrachtungsort 24 her gesehen deckt die Sichtblende 12 den äusseren Rand 22 der 2D Bildfläche 18 und allenfalls ein nach radial aussen an den äusseren Rand 22 anschliessendes Rahmenelement 28 ab.

An dieser Stelle sei erwähnt, dass das äusseren Rahmenelement 28, ein Gehäuse 28' von einem Gerät (nicht gezeigt), wie beispielsweise ein Mobiltelefon, ein mobiles TV- bzw. DVD-Gerät, ein PC-Bildschirm oder ein stationäres TV-Gerät sein kann, welches dazu dient die 2D Bildfläche darzustellen beziehungsweise vor äusseren Einflüssen zu schützen.

Es ist jedoch auch denkbar, dass das äussere Rahmenelement 28 lediglich ein Rahmen, insbesondere Bilderrahmen 28'', der 2D Bildfläche ist.

Es ist des Weiteren auch denkbar, dass die 2D Bildfläche 18 kein Rahmenelement 28 aufweist, sondern als individuelles Foto 18' vorliegt. In diesem Fall würde die Sichtblende 12 lediglich den äusseren Rand 22 der 2D Bildfläche 18 abdecken.

In Fig. 1 ist zur besseren Veranschaulichung der vorliegenden Erfindung, vom Betrachtungsort 24 her gesehen, das Sichtfeld 15 durch die Öffnung 14 ausgebildet und ermöglicht dem Betrachter die Sicht auf einen Bildausschnitt 38' auf der 2D Bildfläche 18, wobei die Sichtblende 12 mit seinem äusseren Rand 34, vom Betrachtungsort 24 her gesehen, die Sicht auf das äussere Rahmenelement 28 verdeckt.

Der Abstand 20 des das Sichtfeld 15 begrenzenden Randes 16 der Sichtblende 12 zur dahinter angeordneten 2D Bildfläche 18 ist etwa 2% bis etwa 30% einer grössten Ausdehnung 36 der 2D Bildfläche 18. In vorliegendem Ausführungsbeispiel gemäss Fig. 1 wurde zur besseren Veranschaulichung kein reales Verhältnis zwischen der Sichtblende 12 und der 2D Bildfläche 18 dargestellt.

Unter der grössten Ausdehnung 36 wird jener Abstand auf der 2D Bildfläche 18 verstanden, welcher zwischen zwei Punkten auf der 2D Bildfläche 18 am grässten ist. Entsprechend ist im vorliegenden Ausführungsbeispiel wegen der rechteckigen Form der 2D Bildfläche 18 die grösste Ausdehnung 36, die Diagonale 36'.

Der Betrachtungsort 24 ist beispielsweise ein Sitzplatz in einem Zimmer oder einem grösseren Saal, von welchem aus die Sicht durch die Öffnung 14, insbesondere den das Sichtfeld 15 begrenzenden Rand 22 der Sichtblende 12 auf die 2D Bildfläche ermöglicht wird. Hierbei ist es vorteilhaft, wenn bei der Sicht durch den das Sichtfeld 15 begrenzenden Rand 22 der Sichtblende 12 nur eine eingeschränkte Bildinformation 38, im Sinne des Bildausschnitts 38', auf der 2D Bildfläche 18 wahrgenommen wird, ohne dabei den äusseren Rand 22 der 2D Bildfläche 18 oder gegebenenfalls das nach radial aussen an den äusseren Rand 22 anschliessende Rahmenelement 28 zu sehen.

Dies hat den vorteilhaften Effekt, dass bei bestimmungsgemässem Gebrauch der Vorrichtung 10, vom Betrachtungsort 24 her gesehen, ein losgelöster Raum vor der sichtblende 12 in Richtung zur 2D Bildfläche 18 entsteht, welches der räumlichen Tiefenwirkung entspricht.

Im Unterschied zu den Betrachtungsvorrichtungen im Stand der Technik, wie in der Einleitung ausgeführt, wird bei der vorliegenden Erfindung, vom Betrachtungsort 24 her gesehen, der genaue Standort der 2D Bildfläche 18 vor der Sichtblende 12 in Richtung zur 2D Bildfläche 18, nicht wahrgenommen. Dies hat zur Folge, dass vom Betrachtungsort 24 her gesehen, keine Doppelbilder wahrgenommen werden können, die der Betrachter verarbeiten müsste. vielmehr, wird der losgelöste Raum erzeugt, wenn der Abstand 20 zwischen dem das Sichtfeld 15 begrenzenden Rand 16 der Sichtblende 12 und der dahinter angeordneten 2D Bildfläche 18 wenigstens annährend konstant ist.

Zum Schutz vor äusseren Einwirkungen kann die Öffnung 14 der Sichtblende 12 mit einem transparenten Material 40 überspannt sein. Hierbei könnte eine Glasscheibe 40' zum Einsatz kommen. Die Glasscheibe 40' könnte vorzugsweise doppelseitig entspiegelt sein, um Spiegelungen auf der Glasscheibe 40' seitens der 2D Bildfläche 18 oder der Umgebung zu vermeiden.

In diesem Zusammenhang sei erwähnt, dass die 2D Bildfläche 18 in eingebautem Zustand der erfindungsgemässen Vorrichtung und unter Verwendung der Glasscheibe 40' gegenüber der Umgebung verschlossen und somit bestens geschützt ist.

Bei einer bevorzugten Ausführungsform der vorliegenden Erfindung kann die Glasscheibe 40' auch als Berührungs-Bildschirm (touch-screen) mit robusten Eigenschaften ausgebildet sein. Entsprechend kann die der Umgebung zugewandte Aussenseite der Glasscheibe 40' als Berührungs-Bildschirm problemlos abwaschbar ausgebildet sein.

## Patentansprüche

1. Vorrichtung zur Erzeugung einer räumlichen Tiefenwirkung einer in einer 2D Bildfläche vorliegenden Bildinformation, mit
einer eine Öffnung (14) aufweisenden Sichtblende (12), wobei die Sichtblende (12) einen ein Sichtfeld (15) begrenzenden Rand (16) aufweist und die Öffnung (14) das Sichtfeld (15) ausbildet; und
einer in einem Abstand (20) hinter der sichtblende (12) angeordneten und von einem äusseren Rand (22) umfangseitig begrenzten 2D Bildfläche (18, 18'), wobei die 2D Bildfläche (18, 18') grösser als die Öffnung (14) der sichtblende (12) ist; so dass
bei bestimmungsgemässem Gebrauch von einem Betrachtungsort (24) her gesehen die sichtblende (12) den äusseren Rand (22) der 2D Bildfläche (18, 18') und allenfalls ein nach radial aussen an den äusseren Rand (22) anschliessendes Rahmenelement (28, 28', 28' ') verdeckt; wobei
der Abstand (20) zwischen dem das Sichtfeld (15) begrenzenden Rand (16) der Sichtblende (12) und der dahinter angeordneten 2D Bildfläche (18, 18') wenigstens annährend konstant ist.

2. Vorrichtung nach Anspruch 1, **dadurch gekennzeichnet, dass** der Abstand (20) des das Sichtfeld (15) begrenzenden Randes (16) der Sichtblende (12) zur dahinter angeordneten 2D Bildfläche (18, 18') etwa 2% bis etwa 30% einer grössten Ausdehnung (36), insbesondere einer Diagonalen (36'), der 2D Bildfläche (18, 18') ist.

3. Vorrichtung nach Anspruch 2, **dadurch gekennzeichnet, dass** der Abstand etwa 4% bis etwa 20%, besonders bevorzugt etwa 8% bis etwa 15%, der grössten Ausdehnung (36) der 2D Bildfläche (18, 18') ist.

4. Vorrichtung nach Anspruch 2, **dadurch gekennzeichnet, dass** der Abstand etwa 10% der grössten Ausdehnung (36) der 2D Bildfläche (18, 18') ist.

5. vorrichtung nach einem der Ansprüche 1 bis 4, **dadurch gekennzeichnet, dass** der das Sichtfeld (15) begrenzende Rand (16) der Sichtblende (12) in einer Ebene liegt.

6. Vorrichtung nach einem der Ansprüche 1 bis 5, **dadurch gekennzeichnet, dass** die 2D Bildfläche (18, 18') eben ausgebildet ist.

7. Vorrichtung nach einem der Ansprüche 1 bis 6, **dadurch gekennzeichnet, dass** der das Sichtfeld (15) begrenzende Rand (16) der Sichtblende (12) und die 2D Bildfläche (18, 18') zueinander parallel angeordnet sind.

8. Vorrichtung nach einem der Ansprüche 1 bis 7, **dadurch gekennzeichnet, dass** die Öffnung (14), insbesondere der das Sichtfeld (15) begrenzende Rand (16), der sichtblende (12) und der äussere Rand (22) der 2D Bildfläche (18, 18') in ihrer Form ähnlich sind.

9. Vorrichtung nach einem der Ansprüche 1 bis 8, **dadurch gekennzeichnet, dass** die Öffnung (14) der Sichtblende (12) mit einem transparenten Material (40) überspannt ist.

10. Vorrichtung nach Anspruch 9, **dadurch gekennzeichnet, dass** das transparente Material (40) eine Glasscheibe (40'), insbesondere eine doppelseitig entspiegelte Glasscheibe (40'), ist.

11. Verfahren zur Erzeugung einer räumlichen Tiefenwirkung einer in einer 2D Bildfläche vorliegenden Bildinformation, mit einer Vorrichtung nach einem der Ansprüche 1 bis 10, mit den folgenden Schritten:
bereitstellen einer eine Öffnung (12) aufweisenden Sichtblende (12), wobei die Sichtblende (12) einen ein Sichtfeld (15) begrenzenden Rand (16) aufweist und die Öffnung (14) das Sichtfeld (15) ausbildet; und
anordnen einer von einem äusseren Rand (22) umfangseitig begrenzten 2D Bildfläche (18, 18') in einem Abstand (20) hinter der Sichtblende (12), wobei die 2D Bildfläche (18, 18') grösser als die Öffnung (14) der Sichtblende (12) ist; so dass
bei bestimmungsgemässem Gebrauch der Vorrichtung von einem Betrachtungsort (24) her gesehen, die Sichtblende (12) den äusseren Rand (22) der 2D Bildfläche (18, 18') und allenfalls eines nach radial aussen an den äusseren Rand (22) anschliessendes Rahmenelement (28, 28', 28'') verdeckt; und
zwischen dem Sichtfeld (15) begrenzenden Rand (16) der Sichtblende (12) und der dahinter angeordneten 2D Bildfläche (18, 18') ein wenigstens annährend konstanter Abstand (20) vorliegt.

12. Verfahren nach Anspruch 11, **gekennzeichnet durch** anordnen des das Sichtfeld (15) begrenzenden Randes (16) der Sichtblende (12) zur dahinter angeordneten 2D Bildfläche (18, 18') im Abstand (20) von etwa 2% bis etwa 30% einer grössten Ausdehnung (36), insbesondere einer Diagonalen (36'), der 2D Bildfläche (18, 18').

13. Verfahren nach Anspruch 11, **gekennzeichnet durch** anordnen des das Sichtfeld (15) begrenzenden Randes (16) der Sichtblende (12) zur dahinter angeordneten 2D Bildfläche (18, 18') im Abstand (20) von etwa 4% bis etwa 20%, besonders bevorzugt etwa 8% bis etwa 15%, der grössten Ausdehnung (36) der 2D Bildfläche (18, 18').

14. Verfahren nach Anspruch 11, **gekennzeichnet durch** anordnen des das Sichtfeld (15) begrenzenden Randes (16) der Sichtblende (12) zur dahinter angeordneten 2D Bildfläche (18, 18') im Abstand (20) von etwa 10% der grössten Ausdehnung (36) der 2D Bildfläche (18, 18').

15. Verfahren nach einem der Ansprüche 11 bis 14, **gekennzeichnet durch** anordnen des das Sichtfeld (15) begrenzenden Randes (16) der Sichtblende (12) parallel zur 2D Bildfläche (18, 18').
